# EUROPEAN PATENT APPLICATION

(11) **EP 4 671 048 A1**
(43) Date of publication of application: **31.12.2025**
(21) Application number: 24835432.6
(22) Date of filing: 05.07.2024
(51) Int. Cl.: B60R 13/00

(54) **HOOD ORNAMENT LIFTING MECHANISM AND VEHICLE**

(30) Priority: 05.07.2023 CN 202310821612; 05.07.2023 CN 202310820779
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: CAI, Xinhang, Ningbo, Zhejiang 315899 (CN); XU, Yun, Ningbo, Zhejiang 315899 (CN); LI, Guolin, Ningbo, Zhejiang 315899 (CN); CHEN, Hongqiang, Ningbo, Zhejiang 315899 (CN); LI, Lian lei, Ningbo, Zhejiang 315899 (CN); ZHAO, Weigang, Ningbo, Zhejiang 315899 (CN); CAO, Huosen, Ningbo, Zhejiang 315899 (CN); LIU, Zhiyong, Ningbo, Zhejiang 315899 (CN)
(74) Representative: Michalski Hüttermann & Partner Patentanwälte mbB
(86) International application number: PCT/CN2024/103861
(87) International publication number: WO 2025/007954

(57) **Abstract**

Provided are an emblem lifting mechanism and a vehicle. The emblem lifting mechanism includes an emblem body (10), a driving assembly (20) and a clutch (30). The driving assembly is disposed in a vehicle body of the vehicle (500). The clutch selectively connects the driving assembly and the emblem body. When the clutch connects the driving assembly and the emblem body, the driving assembly is able to, through the clutch, drive the emblem body to move relative to the vehicle body of the vehicle and support the emblem body, and when the clutch disconnects the driving assembly and the emblem body, the emblem body is able to descend under gravitational force of itself. Thus, the emblem body can be effectively protected, and the emblem body is prevented from being damaged or stolen.

## Description

### CROSS-REFERENCE TO RELATED APPLICATIONS

**This** application claims priorities to Chinese Patent Application No. 202310821612.6, filed with the Chinese Patent Office on July 5, 2023, and Chinese Patent Application No. 202310820779.0, filed with the Chinese Patent Office on July 5, 2023, entire contents of which are incorporated herein by reference.

### TECHNICAL FIELD

**Embodiments** of the present application relate to but are not limited to the field of vehicle technologies, and in particular, to but not limited to an emblem lifting mechanism and a vehicle.

### BACKGROUND

Emblems are symbols for identification of various vehicle brands, and are mainly used for vehicle identification. A three-dimensional emblem usually protrudes from a vehicle body, and is vertically disposed at an engine hood, such that the emblem is easily collided by pedestrians or manually broken, or the emblem, when being collided, easily causes a secondary injury to people.

### SUMMARY

Below is a summary of the subject matters described in detail herein. The summary is not intended to limit the protection scope of the claims. The embodiments of the present application provide an emblem lifting mechanism and a vehicle.

The emblem lifting mechanism according to the embodiments of the present application is used for a vehicle. The emblem lifting mechanism includes an emblem body, a driving assembly, and a clutch. The driving assembly is disposed in a vehicle body of the vehicle. The clutch selectively connects the driving assembly and the emblem body. When the clutch connects the driving assembly and the emblem body, the driving assembly is able to, through the clutch, drive the emblem body to move relative to the vehicle body of the vehicle and support the emblem body, and when the clutch disconnects the driving assembly and the emblem body, the emblem body is able to descend under gravitational force of itself.

The emblem lifting mechanism according to the embodiments of the present application is used for the vehicle. The emblem lifting mechanism includes the emblem body, the driving assembly, and the clutch. The driving assembly is disposed in the vehicle body of the vehicle. The clutch selectively connects the driving assembly and the emblem body. When the clutch connects the driving assembly and the emblem body, the driving assembly is able to, through the clutch, drive the emblem body to move relative to the vehicle body of the vehicle and support the emblem body, and when the clutch disconnects the driving assembly and the emblem body, the emblem body is able to descend under gravitational force of itself. In this way, in a normal state, the clutch connects the emblem body and the driving assembly, and the emblem lifting mechanism can control the emblem body to ascend and hold at a position through the driving assembly. When the emblem body needs to descend normally, the driving assembly can make the emblem body descend to retract into the vehicle body through the clutch. When the emblem body is collided by a pedestrian or is moved by an external force, the clutch can directly disconnect the emblem body and the driving assembly, such that the emblem body can quickly descend under gravitational force of itself. A descending speed in this descending manner is faster than that driven by the driving assembly, which can effectively protect the emblem body.

In some embodiments, the emblem lifting mechanism further includes a mounting seat, where the emblem body is provided on the mounting seat, and at least a part of the clutch is disposed on the mounting seat.

In this way, the mounting seat can support and protect the emblem body and a part of the drive mechanism, such that the emblem body can ascend or descend together with the mounting seat, and meanwhile, when the drive mechanism disconnects the driving assembly and the emblem body, the emblem body and the part of the drive mechanism can quickly descend together with the mounting seat, ensuring the stable movement of the emblem lifting mechanism.

**In** some embodiments, the clutch includes a sliding block and a pin, where the pin is slidably inserted in the sliding block, the driving assembly is connected to the sliding block, the pin is movably disposed on the mounting seat, and an end of the pin away from the sliding block is connected to the emblem body.

**In** this way, functions of the clutch can be realized through the connection and disconnection between the pin and the sliding block, and when the emblem body needs to ascend and hold, the pin can be inserted in the sliding block, such that the driving assembly can drive the emblem body to ascend and hold at a fixed position through the sliding block and the pin, and users can determine a brand of the vehicle through the emblem body. After the pin slides out of the sliding block, the emblem body and the mounting seat can quickly descend under gravitational force of themself, avoiding the emblem body from being damaged.

In some embodiments, the pin includes a first end and a second end disposed opposite to each other, where the sliding block includes an engaging groove, where the second end of the pin is connected to the emblem body, and the first end of the pin is extended into the engaging groove of the sliding block, such that the sliding block is able to drive the emblem body to ascend or descend through the pin.

In this way, the emblem body can be connected to the second end of the pin, and when the emblem body is collided by a pedestrian or is moved by an external force, the first end of the pin can be driven through the second end of the pin to slide out of the engaging groove of the sliding block, such that the pin and the emblem body can be detached from the support of the sliding block, and quickly descend to retract into the vehicle body of the vehicle by means of gravitational force of themself, avoiding the emblem body from being damaged.

In some embodiments, the clutch further includes an upper swing rod, a rocker and a lower swing rod sequentially connected from top to bottom, where the rocker is rotatably fixed on the mounting seat through a fixing shaft, two ends of the rocker are respectively connected to the upper swing rod and the lower swing rod, an end of the upper swing rod away from the rocker is connected to the emblem body, and an end of the lower swing rod away from the rocker is connected to the pin.

In this way, the upper swing rod, the rocker and the lower swing rod are sequentially connected and cooperated, and when the emblem body is collided or is moved by an external force, a movement direction of the emblem body can be converted and a movement distance of the emblem body can be amplified through the upper swing rod, the rocker and the lower swing rod, such that the pin can slide out of the sliding block, and the emblem body can quickly descend by means of gravitational force of itself.

In some embodiments, the clutch further includes a first elastic component and a transmission base, where the emblem body is disposed on the transmission base, and two ends of the first elastic component are respectively connected to the transmission base and the upper swing rod.

In this way, the emblem body and the first elastic component are respectively disposed on two sides of the transmission base, a movement amount of the emblem body in each direction can be converted into displacement in a vertical direction through the first elastic component, the first elastic component can drive the upper swing rod to rotate, and the upper swing rod, the rocker and the lower swing rod sequentially cooperate and rotate, so as to drive the pin to be pulled out of the engaging groove of the sliding block, realizing the separation action of the clutch, and further ensuring that the emblem body can quickly descend by means of gravitational force of itself.

In some embodiments, the transmission base is further formed with a connecting rod, and the first elastic component is sleeved on the connecting rod.

In this way, the first elastic component can be sleeved on the connecting rod, and the connecting rod does not affect the normal movement of the first elastic component, so as to ensure that the first elastic component can keep in the vertical direction, and the direction and position of the first elastic component are accurate, while the connecting rod can protect the first elastic component.

In some embodiments, the clutch further includes a connecting seat disposed on the mounting seat, where the connecting seat is formed with a through hole, the connecting rod is inserted into the through hole and is able to slide relative to the connecting seat, the two ends of the first elastic component are respectively connected to the transmission base and the mounting seat, and the connecting rod is hinged to the end of the upper swing rod away from the rocker.

In this way, the transmission base and the mounting seat can provide elastic support through the first elastic component, and when the emblem body is collided by a pedestrian or is moved by an external force, the first elastic component can convert displacement in other directions into displacement in the vertical direction, such that the transmission base can drive the connecting rod to pass through the through hole and move downwards to push the upper swing rod and then trigger the action of the pin sliding out of the engaging groove.

In some embodiments, the emblem lifting mechanism further includes a guide rail disposed in the vehicle body of the vehicle, where the sliding block is slidably disposed on the guide rail.

In this way, the sliding block can be disposed on the guide rail, and the driving assembly can drive the sliding block to vertically move on the guide rail, ensuring the normal ascending or descending of the emblem body.

In some embodiments, the emblem lifting mechanism further includes a second elastic component, where the second elastic component is in a tensioned state and is respectively connected to the mounting seat and the vehicle body of the vehicle.

In this way, when the emblem body is collided by a pedestrian or is moved by an external force, the pin is slid out of the engaging groove, such that the pin and the emblem body can be detached from the support of the sliding block, and the mounting seat and the emblem body can quickly descend by means of gravitational force of themself. At the same time, the second elastic component can speed up the pulling of the mounting seat by means of elasticity of itself to accelerate a descending speed of the mounting seat and the emblem body, such that the emblem body is retracted into the vehicle body of the vehicle, avoiding the emblem body from being damaged.

In some embodiments, the emblem lifting mechanism further includes a guide rail, a mounting seat and a sliding block, where the sliding block is able to drive the mounting seat to slide on the guide rail, and the mounting seat is provided with an emblem assembly; the emblem assembly includes the emblem body and a connecting rod fixed to the emblem body; the clutch includes a lifting assembly, the lifting assembly includes a transmission rack, a gear structure and a pin, the gear structure is respectively meshed with the transmission rack and the pin, the transmission rack is fixed to the connecting rod, and the pin is locked with the sliding block; the emblem body is stressed to trigger the transmission rack to move downwards, such that the gear structure is driven to rotate to enable the pin to be separated from the sliding block, and the emblem assembly rapidly descends under gravitational force of itself along the guide rail.

In some embodiments, the mounting seat is provided with a second elastic component, a top end of the second elastic component is fixed on the mounting seat, a bottom end of the second elastic component is fixed on the vehicle body, and when the emblem assembly is rapidly descended, the second elastic component provides a downward pulling force.

In some embodiments, the gear structure includes a reversing gear and an unlocking gear that are coaxially connected, where the reversing gear is meshed with the transmission rack, and the unlocking gear is meshed with the pin.

In some embodiments, a transmission base is disposed between the emblem body and the connecting rod, and when the emblem body is stressed, the transmission base is able to convert displacement of the emblem body into displacement of the connecting rod in a vertical direction.

In some embodiments, the emblem assembly further includes a first elastic component, where a top portion of the first elastic component is abutted against the connecting rod, and a bottom portion of the first elastic component is abutted against the mounting seat; the emblem assembly further includes an emblem base, and the emblem body is in clearance fit with the emblem base.

In some embodiments, the pin includes a clamping portion and a meshing portion, where the clamping portion is engaged with the sliding block, and the meshing portion is meshed with the unlocking gear.

In some embodiments, the mounting seat is provided with a sliding groove for the pin to slide, and the sliding groove is disposed in an inclined manner.

In some embodiments, the emblem lifting mechanism further includes a mounting plate, where the guide rail is fixed on the mounting plate, the mounting plate is further provided with a sliding rail for the sliding block to slide, and the sliding rail and the guide rail are integrally arranged.

In some embodiments, the driving assembly includes a motor, and the motor is able to drive the sliding block to drive the mounting seat to slowly ascend or descend on the guide rail.

In some embodiments, the driving assembly further includes two fixed pulleys, where the two fixed pulleys are connected to the motor through a belt, and the motor is able to drive the belt to move.

In some embodiments, the sliding block is provided with a first sliding portion and a second sliding portion with an opening toward the guide rail, and where the second sliding portion is in cooperation with the belt.

In some embodiments, the lifting assembly is disposed below the emblem assembly.

A vehicle according to the embodiments of the present application includes the emblem lifting mechanism according to any one of the above embodiments.

In some embodiments, the vehicle further includes an emblem cover, a front engine hood, and the emblem lifting mechanism as described above, where the emblem lifting mechanism can be mounted in a front engine compartment of the vehicle, and the emblem cover is mounted on the front engine hood.

In the emblem lifting mechanism and the vehicle in the embodiments of the present application, the emblem lifting mechanism is used for the vehicle. The emblem lifting mechanism includes the emblem body, the driving assembly, and the clutch. The driving assembly is disposed in the vehicle body of the vehicle. The clutch selectively connects the driving assembly and the emblem body. When the clutch connects the driving assembly and the emblem body, the driving assembly is able to, through the clutch, drive the emblem body to move relative to the vehicle body of the vehicle and support the emblem body, and when the clutch disconnects the driving assembly and the emblem body, the emblem body is able to descend under gravitational force of itself. In this way, in a normal state, the clutch is connected to the emblem body and the driving assembly, and the emblem lifting mechanism can control the emblem body to ascend and hold at a position through the driving assembly. When the emblem body needs to descend normally, the driving assembly can make the emblem body descend to retract into the vehicle body through the clutch. When the emblem body is collided by a pedestrian or is moved by an external force, the clutch can directly disconnect the emblem body and the driving assembly, such that the emblem body can quickly descend under gravitational force of itself. A descending speed in this descending manner is faster than that driven by the driving assembly, which can effectively protect the emblem body.

In the emblem lifting mechanism and the vehicle provided in the present application, the emblem assembly and the lifting assembly are disposed on the mounting seat, and after the emblem body is stressed, the transmission base is able to convert the displacement of the emblem body into the downward displacement of the connecting rod, such that the transmission rack moves downwards, and then the gear structure rotates to drive the pin to be separated from the sliding block, enabling the emblem assembly to quickly descend along the guide rail. According to the solution, when the emblem body is stressed, the lifting assembly is disconnected from the sliding block, and the emblem assembly descends into the vehicle along the guide rail under gravitational force of itself, avoiding the emblem body from being damaged or stolen.

Some of additional aspects and advantages of the present application will be given in the following description, and some of the additional aspects and advantages of the present application will become apparent from the following description, or be understood through practice of the present application. Other aspects may be learned upon reading and understanding the drawings and the detailed description.

### BRIEF DESCRIPTION OF THE DRAWINGS

The above and/or additional aspects and advantages of the present application will become apparent and readily understood from the description of the embodiments in conjunction with the following drawings.
FIG. 1 is a schematic structural diagram of an emblem lifting mechanism according to embodiments of the present application.
FIG. 2 is another schematic structural diagram of an emblem lifting mechanism according to embodiments of the present application.
FIG. 3 is another schematic structural diagram of an emblem lifting mechanism according to embodiments of the present application.
FIG. 4 is still another schematic structural diagram of an emblem lifting mechanism according to embodiments of the present application.
FIG. 5 is a perspective view of an emblem lifting mechanism according to the present application.
FIG. 6 is a partial sectional view of the emblem lifting mechanism in FIG. 5.
FIG. 7 is a perspective view of the emblem lifting mechanism from another angle according to the present application.
FIG. 8 is a perspective view of an emblem assembly in FIG. 5 after descending.
FIG. 9 is a view similar to FIG. 8 from another angle.
FIG. 10 is a perspective view of a guide rail in FIG. 5.
FIG. 11 is an exploded perspective view of a mounting seat in FIG. 5.
FIG. 12 is a perspective view of a sliding block in FIG. 6.
FIG. 13 is an exploded perspective view of an emblem assembly in FIG. 5.
FIG. 14 is an enlarged view of circle A in FIG. 5.
FIG. 15 is an exploded perspective view of a lifting assembly in FIG. 5.
FIG. 16 is an exploded perspective view of a driving assembly in FIG. 5.
FIG. 17 is a schematic structural diagram of a vehicle according to embodiments of the present application.

Description of main element signs:
emblem body 10, emblem base 103, limiting block 11, driving assembly 20, motor 201, fixed pulley 202, belt 203, sliding groove 21, mounting seat body 22, connecting component 23, protrusion 24, mounting frame 25, base 26, bolt 27, clutch 30, first sliding portion 301, second sliding portion 302, inclined surface 303, engaging groove 304, sliding block 31, pin 32, first end 321, second end 322, clamping portion 323, meshing portion 324, upper swing rod 33, rocker 34, fixing shaft 341, lower swing rod 35, first elastic component 36, transmission base 37, connecting rod 371, connecting seat 38, through hole 381, emblem assembly 4, mounting seat 40, lifting assembly 5, guide rail 50, transmission rack 51, gear mechanism 52, reversing gear 53, an unlocking gear 54, rotating shaft 56, second elastic component 60, mounting plate 7, sliding rail 9, emblem lifting mechanism 100, emblem cover 200, and vehicle 500.

### DETAILED DESCRIPTION OF THE EMBODIMENTS

**The** embodiments of the present application will be described in detail below, with illustrations thereof represented in the drawings. Like or similar labels throughout the present application refer to like or similar elements or elements with like or similar functions. The embodiments described below with reference to the drawings are exemplary, and are intended only to explain the present application, but cannot be understood as a limitation on the present application.

In the present application, unless explicitly specified and defined otherwise, a first feature being "above" or "below" a second feature may include the first feature being in direct contact with the second feature, or the first feature being not in direct contact with the second feature but being in contact with the second feature through another feature therebetween. Also, the first feature being "above" the second feature includes the first feature being directly and diagonally above the second feature, or merely indicates the first feature being horizontally higher than the second feature. The first feature being "below" the second feature includes the first feature being directly and diagonally below the second feature, or merely indicates the first feature being horizontally lower than the second feature.

The following disclosure provides many different embodiments or examples for implementing different structures of the present application. In order to simplify the disclosure of the present application, components and settings in specific examples will be described below. Of course, they are merely examples, and are not intended to limit the present application. Furthermore, the present application may repeat reference numerals and/or reference letters in different examples, and such repetition is for purposes of simplicity and clarity and does not indicate relationships between various embodiments and/or settings discussed. Further, the present application provides examples of various specific technologies and materials, but those skilled in the art may appreciate the application of other technologies and/or the use of other materials.

In order to avoid damages to a three-dimensional emblem or injuries to a pedestrian, an emblem lifting mechanism is disposed in a vehicle to protect the three-dimensional emblem. At present, a structure of the three-dimensional emblem lifting mechanism is complex, the three-dimensional emblem is driven to descend only by a motor, descending speed of the three-dimensional emblem cannot meet actual requirements, the three-dimensional emblem, when descending into the vehicle, occupies a large space, or resetting process is complex, which do not facilitate the user experience. In addition, due to the fact that the three-dimensional emblem is connected with the motor, when the three-dimensional emblem is collided or is broken intentionally by a person, driving by the motor does not meet the requirement of the three-dimensional emblem for the descending speed, and the three-dimensional emblem is prone to being damaged in a descending process, or when the emblem is collided, a secondary injury is easily caused to people.

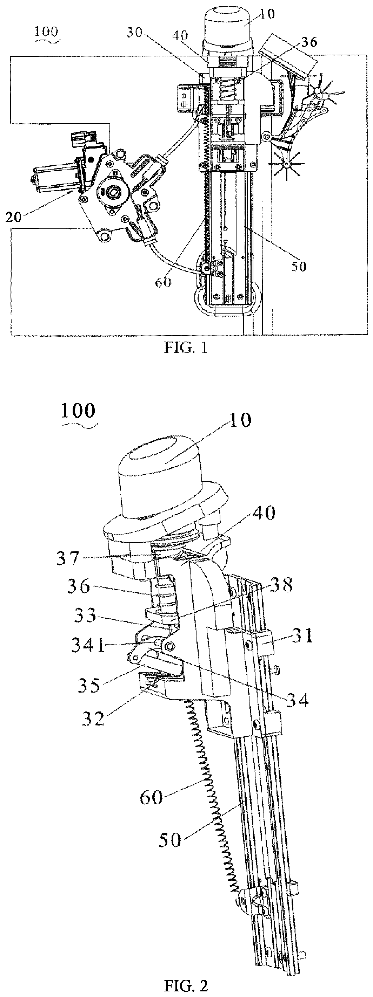

Referring to FIG. 1, FIG. 2 and FIG. 3, an emblem lifting mechanism 100 according to the embodiments of the present application is used for a vehicle 500. The emblem lifting mechanism 100 includes an emblem body 10, a driving assembly 20, and a clutch 30. The driving assembly 20 is disposed in a vehicle body of the vehicle 500. The clutch 30 selectively connects the driving assembly 20 and the emblem body 10. When the clutch 30 connects the driving assembly 20 and the emblem body 10, the driving assembly 20 is able to, through the clutch 30, drive the emblem body 10 to move relative to the vehicle body of the vehicle 500 and support the emblem body 10, and when the clutch 30 disconnects the driving assembly 20 and the emblem body 10, the emblem body 10 is able to descend under gravitational force of itself.

The emblem lifting mechanism 100 according to the embodiments of the present application is used for the vehicle 500. The emblem lifting mechanism 100 includes the emblem body 10, the driving assembly 20, and the clutch 30. The driving assembly 20 is disposed in the vehicle body of the vehicle 500. The clutch 30 selectively connects the driving assembly 20 and the emblem body 10. When the clutch 30 connects the driving assembly 20 and the emblem body 10, the driving assembly 20 is able to, through the clutch 30, drive the emblem body 10 to move relative to the vehicle body of the vehicle 500 and support the emblem body 10, and when the clutch 30 disconnects the driving assembly 20 and the emblem body 10, the emblem body 10 is able to descend under gravitational force of itself. In this way, in a normal state, the clutch 30 connects the emblem body 10 and the driving assembly 20, and the emblem lifting mechanism 100 can control the emblem body 10 to ascend and hold at a position through the driving assembly 20. When the emblem body 10 needs to descend normally, the driving assembly 20 can make the emblem body 10 descend to retract into the vehicle body through the clutch 30. When the emblem body 10 is collided by a pedestrian or is moved by an external force, the clutch 30 can directly disconnect the emblem body 10 and the driving assembly 20, such that the emblem body 10 can quickly descend under gravitational force of itself. A descending speed in this descending manner is faster than that driven by the driving assembly 20, which can effectively protect the emblem body 10.

In the embodiments of the present application, the clutch 30 is disposed between the driving assembly 20 and the emblem body 10, and the clutch 30 can selectively connect or disconnect the driving assembly 20 and the emblem body 10. In this way, when the clutch 30 connects the driving assembly 20 and the emblem body 10 together, the driving assembly 20 can drive the emblem body 10 to slowly ascend or descend relative to the vehicle body of the vehicle 500, and hold at a position at the time of the emblem body 10 reaching the top or the bottom, so as to ensure the normal use of the emblem body 10. In the process that the emblem body 10 is collided, moved or stolen by a pedestrian, the clutch 30 can disconnect the driving assembly 20 and the emblem body 10, such that the emblem body 10 loses the support of the driving assembly 20, and can slide downward into the vehicle body quickly under gravitational force of itself, avoiding the emblem body 10 from being damaged or stolen.

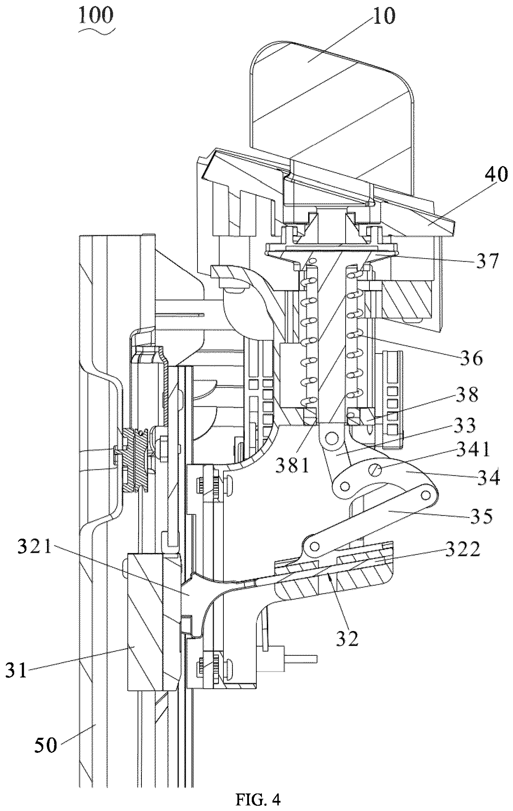

Referring to FIG. 2 and FIG. 4, in some embodiments, the emblem lifting mechanism 100 further includes a mounting seat 40, the emblem body 10 is provided on the mounting seat 40, and at least a part of the clutch 30 is disposed on the mounting seat 40.

In this way, the mounting seat 40 can support and protect the emblem body 10 and a part of the clutch 30, such that the emblem body 10 can ascend or descend together with the mounting seat 40, and meanwhile, when disconnecting the connection between the driving assembly 20 and the emblem body 10, the emblem body 10 and the part of the clutch 30 can quickly descend together with the mounting seat 40, ensuring the stable movement of the emblem lifting mechanism 100.

Specifically, the mounting seat 40 is movably disposed in the vehicle body of the vehicle 500, and when the emblem body 10 ascends or descends, the mounting seat 40 can be used to carry the emblem body 10. The driving assembly 20 can be connected to the clutch 30, and the part of the clutch 30 is directly disposed on the mounting seat 40, such that the driving assembly 20, when driving the clutch 30 to move, can drive the entire mounting seat 40 and the emblem body 10 on the mounting seat 40 to move together, ensuring the stability of the emblem lifting mechanism 100.

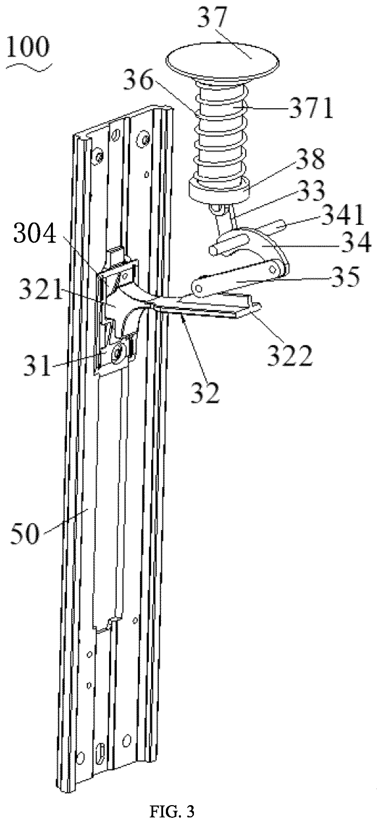

Referring to FIG. 3 and FIG. 4, in some embodiments, the clutch 30 includes a sliding block 31 and a pin 32, where the pin 32 is slidably inserted in the sliding block 31, the driving assembly 20 is connected to the sliding block 31, the pin 32 is movably disposed on the mounting seat 40, and an end of the pin 32 away from the sliding block 31 is connected to the emblem body 10.

In this way, functions of the clutch 30 can be realized through the connection and disconnection between the pin 32 and the sliding block 31, and when the emblem body 10 needs to ascend and hold, the pin 32 can be inserted in the sliding block 31, such that the driving assembly 20 can drive the emblem body 10 to ascend and hold at a fixed position through the sliding block 31 and the pin 32, and users can determine a brand of the vehicle 500 through the emblem body 10. After the pin 32 slides out of the sliding block 31, the emblem body 10 and the mounting seat 40 can quickly descend under gravitational force of themself, avoiding the emblem body 10 from being damaged.

Further, referring to FIG. 3 and FIG. 4, in some embodiments, the pin 32 includes a first end 321 and a second end 322 disposed opposite to each other, the sliding block 31 includes an engaging groove 304, the second end 322 of the pin 32 is connected to the emblem body 10, and the first end 321 of the pin 32 is extended into the engaging groove 304, such that the sliding block 31 is able to drive the emblem body 10 to ascend or descend through the pin 32.

In this way, the emblem body 10 can be connected to the second end 322 of the pin 32, and when the emblem body 10 is collided by a pedestrian or is moved by an external force, the first end 321 of the pin 32 can be driven through the second end 322 of the pin 32 to slide out of the engaging groove 304, such that the pin 32 and the emblem body 10 can be detached from the support of the sliding block 31, and quickly descend to retract into the vehicle body of the vehicle 500 by means of gravitational force of themself, avoiding the emblem body 10 from being damaged.

Still further, referring to FIG. 3 and FIG. 4, in some embodiments, the clutch 30 further includes an upper swing rod 33, a rocker 34 and a lower swing rod 35 sequentially connected from top to bottom, the rocker 34 is rotatably fixed on the mounting seat 40 through a fixing shaft 341, two ends of the rocker 34 are respectively connected to the upper swing rod 33 and the lower swing rod 35, an end of the upper swing rod 33 away from the rocker 34 is connected to the emblem body 10, and an end of the lower swing rod 35 away from the rocker 34 is connected to the pin 32.

In this way, the upper swing rod 33, the rocker 34 and the lower swing rod 35 are sequentially connected and cooperated, and when the emblem body 10 is collided by a pedestrian or is moved by an external force, a movement direction of the emblem body 10 can be converted and a movement distance of the emblem body 10 can be amplified through the upper swing rod 33, the rocker 34 and the lower swing rod 35, such that the pin 32 can slide out of the sliding block 31, and the emblem body 10 can quickly descend by means of gravitational force of itself.

In such embodiments, the upper swing rod 33, the rocker 34, the lower swing rod 35 and the pin 32 can be disposed inside the mounting seat 40, and the mounting seat 40 can play a role of protection, avoiding the upper swing rod 33, the rocker 34, the lower swing rod 35 and the pin 32 from being interfered by external elements during transmission. The upper swing rod 33, the rocker 34, the lower swing rod 35, and the second end 322 of the pin 32 are sequentially hinged together, and at the same time, the fixing shaft 341 passes through and set in a middle portion of the rocker 34, and the fixing shaft 341 is fixed on the mounting seat 40, in this way, when the upper swing rod 33 is rotated, the rocker 34 can be driven to rotate around the fixing shaft 341, and then the lower swing rod 35 can drag the second end 322 of the pin 32 to move, so as to drag the pin 32 out of the engaging groove 304 of the sliding block 31, realizing the detachment action of the clutch 30. At this time, the mounting seat 40, the emblem body 10, the upper swing rod 33, the rocker 34, the lower swing rod 35, and the pin 32 lose support, and can quickly descend under gravitational force of themself. Of course, in other embodiments, the connection may not be performed in a hinged manner, and only the upper swing rod 33 can trigger the rocker 34 to rotate, so as to pull out the pin 32 through the lower swing rod 35, which is not particularly limited herein.

Referring to FIG. 3 and FIG. 4, in some embodiments, the clutch 30 further includes a first elastic component 36 and a transmission base 37, the emblem body 10 is disposed on the transmission base 37, and two ends of the first elastic component 36 are respectively connected to the transmission base 37 and the upper swing rod 33.

In this way, the emblem body 10 and the first elastic component 36 are respectively disposed on two sides of the transmission base 37, a movement amount of the emblem body 10 in each direction can be converted into displacement in a vertical direction through the first elastic component 36, the first elastic component 36 can drive the upper swing rod 33 to rotate, and the upper swing rod 33, the rocker 34 and the lower swing rod 35 sequentially cooperate and rotate, so as to drive the pin 32 to be pulled out of the engaging groove 304 of the sliding block 31, realizing the separation action of the clutch 30, and further ensuring that the emblem body 10 can quickly descend by means of gravitational force of itself.

Still further, referring to FIG. 3 and FIG. 4, in some embodiments, the transmission base 37 is further formed with a connecting rod 371, and the first elastic component 36 is sleeved on the connecting rod 371.

In this way, the first elastic component 36 can be sleeved on the connecting rod 371, and the connecting rod 371 does not affect the normal movement of the first elastic component 36, so as to ensure that the first elastic component 36 keeps in the vertical direction, and the direction and position of the first elastic component 36 are accurate, while the connecting rod 371 can protect the first elastic component 36.

In some embodiments, the clutch 30 further includes a connecting seat 38 disposed on the mounting seat 40, the connecting seat 38 is formed with a through hole 381, the connecting rod 371 is inserted into the through hole 381 and is able to slide relative to the connecting seat 38, the two ends of the first elastic component 36 are respectively connected to the transmission base 37 and the connecting seat 38, and the connecting rod 371 is hinged to the end of the upper swing rod 33 away from the rocker 34.

In this way, the transmission base 37 and the connecting seat 38 can provide elastic support through the first elastic component 36, and when the emblem body 10 is collided by a pedestrian or is moved by an external force, the first elastic component 36 can convert displacement in other directions into displacement in the vertical direction, such that the transmission base 37 can drive the connecting rod 371 to pass through the through hole 381 and move downwards to push the upper swing rod 33 and then trigger the action of the pin 32 sliding out of the engaging groove 304.

Exemplarily, when the emblem body 10 is collided, the emblem body 10 can compress the first elastic component 36 to move downwards through the transmission base 37, and the connecting rod 371 passes through the through hole 381 of the connecting seat 38 to push an upper end of the upper swing rod 33 downwards. The upper swing rod 33 can drive the rocker 34 to rotate counterclockwise around the fixing shaft 341, such that the lower swing rod 35 can drag the pin 32 to be pulled out of the engaging groove 304.

In some embodiments, the connecting rod 371 may further include a cavity structure, the first elastic component 36 may be disposed in a cavity inside the connecting rod 371, and the connecting seat 38 is respectively connected to the first elastic component 36 and the upper swing rod 33, in this way, it can be ensured that the first elastic component 36 keeps moving in the vertical direction, and meanwhile, the connecting rod 371 can further function to protect the first elastic component 36.

Referring to FIG. 2 and FIG. 3, in some embodiments, the emblem lifting mechanism 100 further includes a guide rail 50 disposed in the vehicle body of the vehicle 500, and the sliding block 31 is slidably disposed on the guide rail 50.

In this way, the sliding block 31 can be disposed on the guide rail 50, and the driving assembly 20 can drive the sliding block 31 to vertically move on the guide rail 50, ensuring the normal ascending or descending of the emblem body 10.

Specifically, the guide rail 50 can be vertically disposed in the vehicle body of the vehicle 500, and the driving assembly 20 can drive the sliding block 31 to move along the guide rail 50, so as to drive the mounting seat 40 and the emblem body 10 to move up or down along the guide rail 50, realizing the ascending or descending functions. When the emblem body 10 is collided by a pedestrian or is moved by an external force, the pin 32 slides out of the engaging groove 304, such that the pin 32 and the emblem body 10 can be detached from the support of the sliding block 31, and the mounting seat 40 and the emblem body 10 can quickly descend to retract into the vehicle body by means of gravitational force of themself. At this time, the driving assembly 20 can drive the sliding block 31 to slide downwards along the guide rail 50, and the sliding block 31, after reaching a predetermined position, can be re-connected to the pin 32, and when needed, drive the emblem body 10 and the mounting seat 40 to re-ascend.

Referring to FIG. 1 and FIG. 2, in some embodiments, the emblem lifting mechanism 100 further includes a second elastic component 60, and the second elastic component 60 is in a tensioned state and is respectively connected to the mounting seat 40 and the vehicle body of the vehicle 500.

In this way, when the emblem body 10 is collided by a pedestrian or is moved by an external force, the pin 32 slides out of the engaging groove 304, such that the pin 32 and the emblem body 10 can be detached from the support of the sliding block 31, and the mounting seat 40 and the emblem body 10 can quickly descend by means of gravitational force of themself. At the same time, the second elastic component 60 can speed up the pulling of the mounting seat 40 by means of elasticity of itself to accelerate a descending speed of the mounting seat 40 and the emblem body 10, such that the emblem body 10 is retracted into the vehicle body of the vehicle 500, avoiding the emblem body 10 from being damaged.

It should be noted that, in the embodiments of the present application, the connection position of the second elastic component 60 is not limited, and only the second elastic component 60 can be in the tensioned state and be respectively connected to the mounting seat 40 and the vehicle body. In an example, an upper end of the second elastic component 60 may be connected to the mounting seat 40, and a lower end of the second elastic component 60 may be connected to a bottom portion of the guide rail 50, such that, at the moment when the pin 32 and the emblem body 10 are detached from the support of the sliding block 31, the mounting seat 40 and the emblem body 10 can quickly retract by means of gravitational force of themself and the elasticity of the second elastic component 60.

In the embodiments of the present application, the specific forms of the first elastic component 36 and the second elastic component 60 are not limited, so as to meet different requirements. For example, the first elastic component 36 and the second elastic component 60 may be vertically placed springs. In addition, in other embodiments, other quick descending mechanisms may be included to help the emblem body 10 and the mounting seat 40 to quickly descend, which is not particularly limited herein.

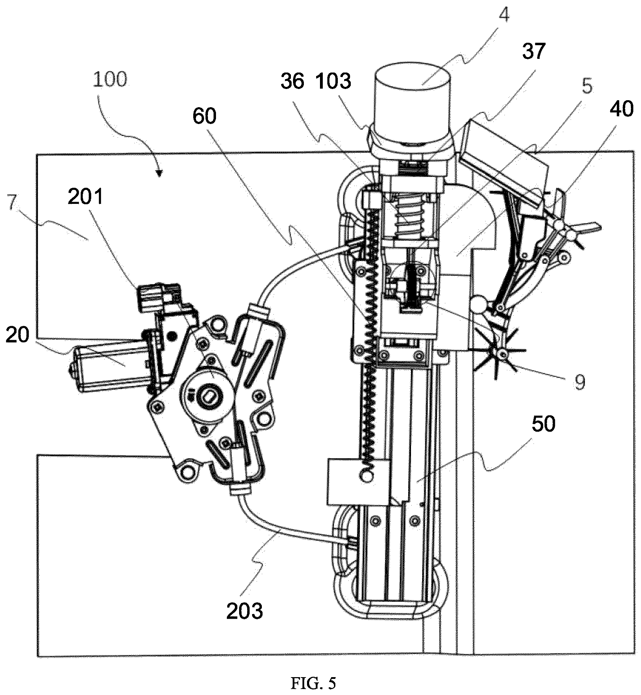

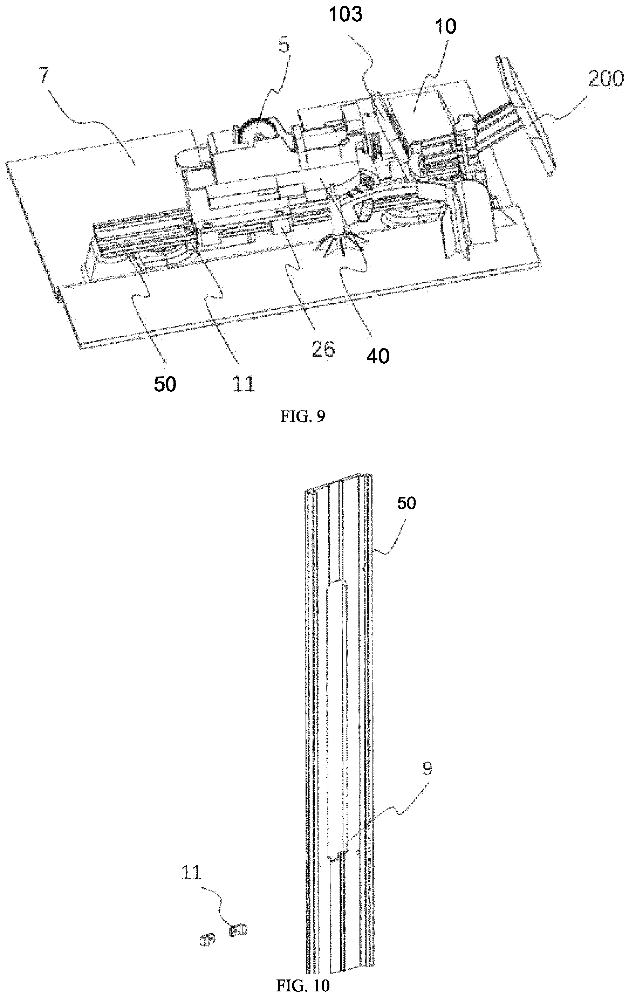

The embodiments of the present application further provide an emblem lifting mechanism 100. The emblem lifting mechanism 100 is fixed on a front engine hood of a vehicle, and is mounted in a front engine compartment of the vehicle. Referring to FIG. 5 to FIG. 9, the emblem lifting mechanism 100 includes a guide rail 50 disposed along a vertical direction, a mounting seat 40 slidable on the guide rail 50, a sliding block 31, an emblem assembly 4 including an emblem body 10, a lifting assembly 5 included in a clutch 30, a second elastic component 60, and a driving assembly 20. The emblem assembly 4, the lifting assembly 5 and the second elastic component 60 are disposed on the mounting seat 40. The sliding block 31 is locked with the lifting assembly 5, and the sliding block 31 drives the mounting seat 40 to slide on the guide rail 50, so as to drive the emblem assembly 4 and the lifting assembly 5 to slide together. Referring to FIG. 10, the guide rail 50 is further provided with a limiting block 11, and the mounting seat 40 descends to a position where the limiting block 11 is located and stops.

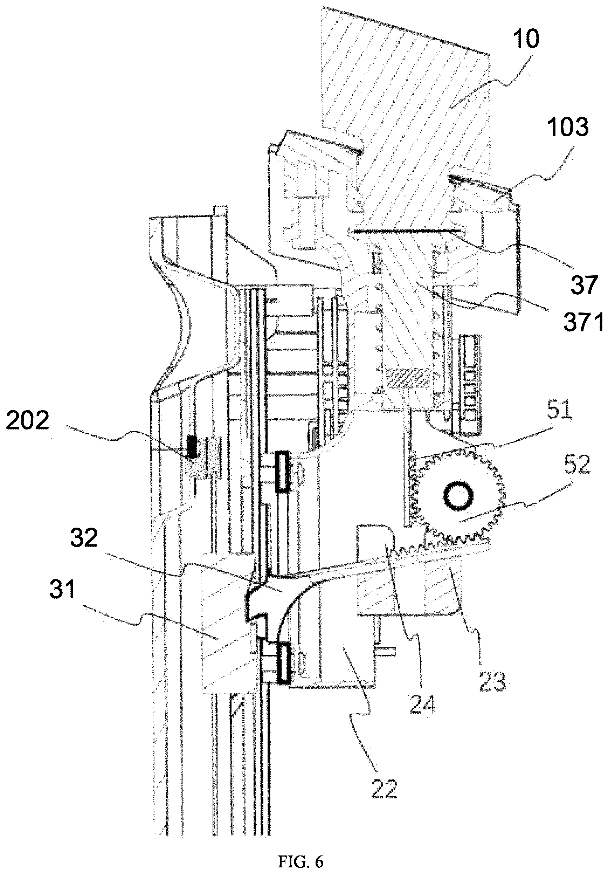

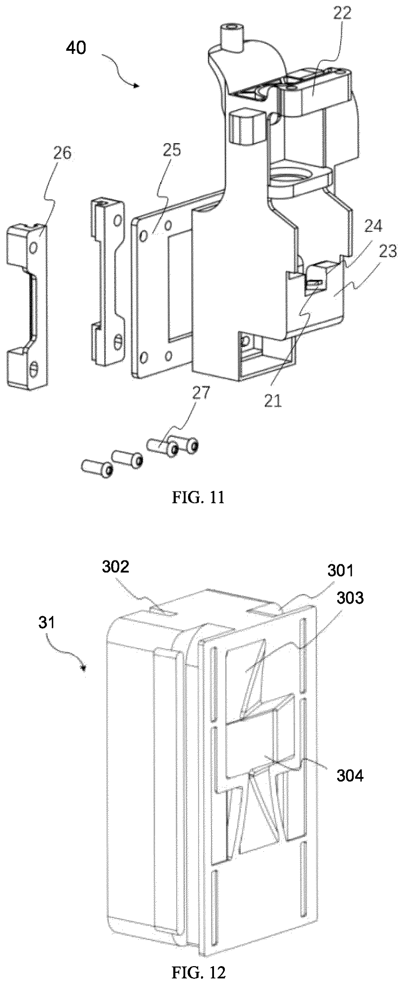

Referring to FIG. 6 and FIG. 11, there is a sliding groove 21 in the mounting seat 40, and the sliding groove 21 is disposed in an inclined manner. Specifically, the mounting seat 40 includes a mounting seat body 22, two connecting components 23 arranged spaced apart are disposed in the mounting seat body 22, and the connecting components 23 are connected to inner walls of the mounting seat body 22. The two connecting components 23 are each provided with protrusions 24 that are opposite to each other. The protrusions 24 and the bottom portion of the connecting component 23 form the sliding groove 21.

The mounting seat 40 is further provided with a mounting frame 25, a bottom portion of the mounting frame 25 is provided with a base 26, and the base 26 is fixed on the mounting frame 25 through bolts 27. The base 26 is engaged to the guide rail 50, such that the mounting seat 40 can slide up or down on the guide rail 50. This structure can enhance the stability of the mounting seat 40 on the guide rail 50. In other embodiments, the base 26 may be directly fixed on the mounting seat 40, such that the structure is simpler.

Referring to FIG. 12, the sliding block 31 is provided with a first sliding portion 301 and a second sliding portion 302 with an opening facing downward; the sliding block 31 is provided with an inclined surface 303 and an engaging groove 304, and the engaging groove 304 is in cooperation with the lifting assembly 5. The first sliding portion 301 cooperates with left and right sides of the guide rail 50, such that the sliding block 31 can slide on the guide rail 50. The second sliding portion 302 cooperates with the driving assembly 20, and the driving assembly 20 can drive the sliding block 31 to slowly ascend or descend.

The cooperation between the engaging groove 304 of the sliding block 31 and the lifting assembly 5 has a locked state and a separated state. When the engaging groove 304 is locked with the lifting assembly 5, the sliding block 31 slowly ascends or descends on the guide rail 50, so as to drive the lifting assembly 5 to slowly ascend or descend together. When the engaging groove 304 is separated from the lifting assembly 5, the lifting assembly 5 quickly descends on the guide rail 50 by means of gravitational force of itself.

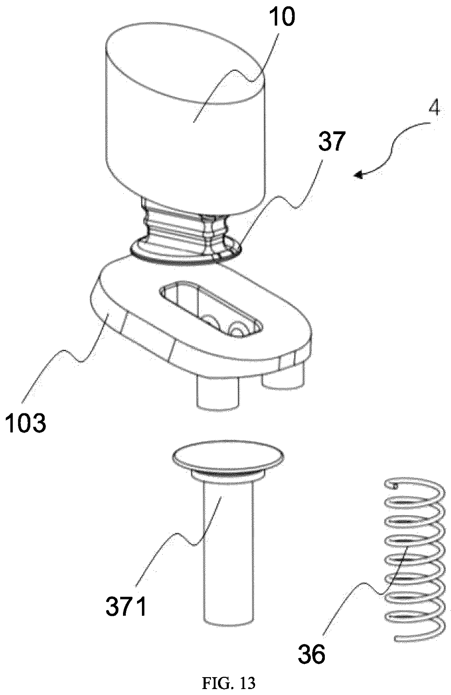

Referring to FIG. 6 and FIG. 13, the emblem assembly 4 includes the emblem body 10 and a transmission base 37 at a bottom portion of the emblem body 10, and the emblem assembly 4 further includes an emblem base 103, a first elastic component 36, and a connecting rod 371 disposed inside the first elastic component 36.

The emblem body 10 is in clearance fit with the emblem base 103, and the emblem base 103 is mounted on the mounting seat 40, so as to function to protect the emblem body 10. The first elastic component 36 is between the mounting seat 40 and the transmission base 37, and the first elastic component 36 is around the connecting rod 371. A top end of the first elastic component 36 abuts against the transmission base 37, and a bottom end of the first elastic component 36 abuts against the mounting seat 40.

The transmission base 37 of the emblem assembly 4 converts displacement of the emblem body 10 in any direction into displacement of the connecting rod 371 in the vertical direction. Specifically, the transmission base 37 is of a plate-shaped structure, a top surface of the transmission base 37 abuts against the emblem body 10, and a top portion of the connecting rod 371 abuts against a bottom surface of the transmission base 37. The emblem body 10 is displaced when being subjected to an external force in any direction, where the force is transmitted to the transmission base 37 and produces a vertical downward component force on the transmission base 37, such that the connecting rod 371 moves downwards.

A bottom portion of the connecting rod 371 of the emblem assembly 4 is connected to the lifting assembly 5, and when the emblem body 10 is stressed, the connecting rod 371 moves downwards to trigger the lifting assembly 5 to unlock. In this process, the first elastic component 36 is compressed downwards, and after the emblem assembly 4 starts to descend, the first elastic component 36 provides an upward elastic force for the emblem body 10 to restore the emblem body 10 to an ascended state.

Referring to FIG. 6, FIG. 14 and FIG. 15, the lifting assembly 5 includes a transmission rack 51, a gear structure 52 and a pin 32, the transmission rack 51 of the lifting assembly 5 is connected to the connecting rod 371 of the emblem assembly 4, and the gear structure 52 of the lifting assembly 5 is respectively meshed with the transmission rack 51 and the pin 32. When the emblem body 10 is stressed to be displaced, the transmission base 37 converts the displacement of the emblem body 10 into downward displacement of the connecting rod 371, such that the connecting rod 371 moves downwards to drive the transmission rack 51 to move downwards. Then, the gear structure 52 rotates counterclockwise, such that the pin 32 slides toward a side away from the sliding block 31, the pin 32 is separated from the sliding block 31, and the emblem assembly 4 quickly descends along the guide rail 50.

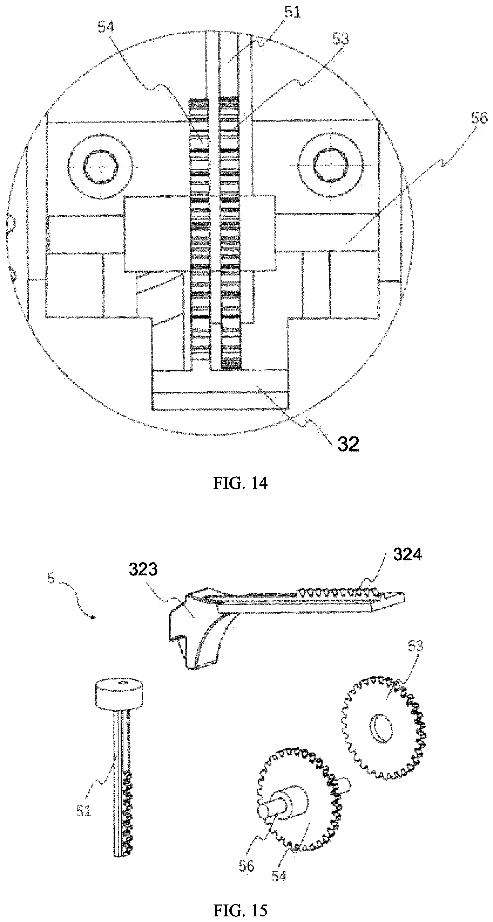

Referring to FIG. 15, in the embodiments, the gear structure 52 includes a reversing gear 53 and an unlocking gear 54 that are coaxially connected, the reversing gear 53 and the unlocking gear 54 are connected through a rotating shaft 56, and two ends of the rotating shaft 56 are fixed on inner walls of the mounting seat 40. The reversing gear 53 is meshed with the transmission rack 51, and the unlocking gear 54 is meshed with the pin 32.

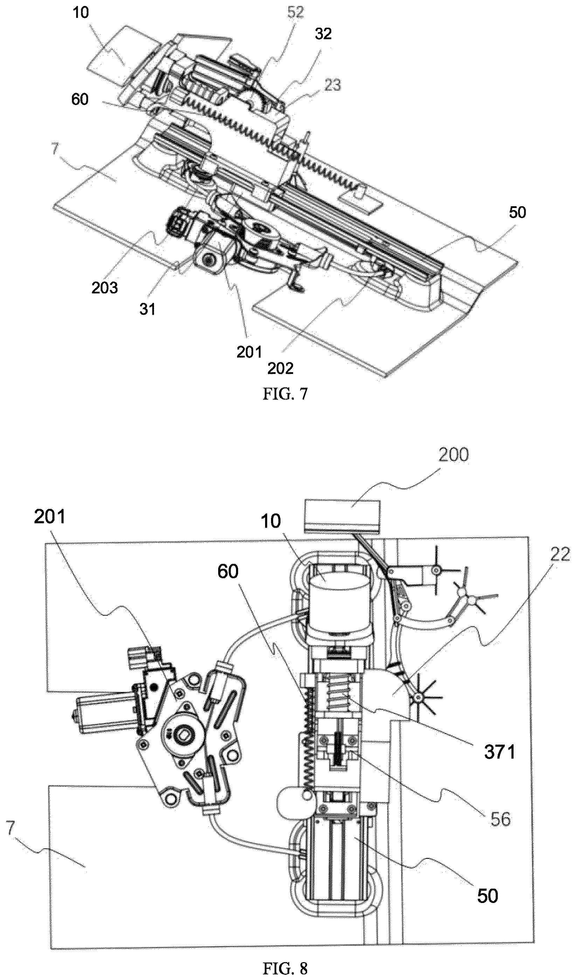

The cooperation between the pin 32 of the lifting assembly 5 and the sliding block 31 has a separated state or a locked state. Specifically, the pin 32 cooperates with the engaging groove 304 to maintain the locked state with the sliding block 31; the pin 32, after moving along the inclined surface 303, can be disconnected from the sliding block 31. When the sliding block 31 is locked with the pin 32, the driving assembly 20 drives the sliding block 31 to drive the mounting seat 40, the lifting assembly 5 and the emblem assembly 4 as a whole to slowly ascend or descend on the guide rail 50; when the sliding block 31 is disconnected from the pin 32, the mounting seat 40 quickly descends on the guide rail 50. Referring to FIG. 8 and FIG. 9, the mounting seat 40 descends to a safe position or to a position where the limiting block 11 is located on the guide rail 50.

Referring to FIG. 15, the pin 32 includes a clamping portion 323 and a meshing portion 324, the clamping portion 323 can move along the inclined surface 303 of the sliding block 31, and the meshing portion 324 of the pin 32 is meshed with the unlocking gear 54 of the gear structure 52. In a normal state, the clamping portion 323 of the pin 32 is engaged in the engaging groove 304 of the sliding block 31, and when the pin 32 slides toward the side away from the sliding block 31, the clamping portion 323 of the pin 32 moves upwards along the inclined surface 303 of the sliding block 31, and is separated from the engaging groove 304 of the sliding block 31.

When the transmission rack 51 of the lifting assembly 5 moves downwards, the reversing gear 53 of the gear structure 52 is driven to rotate counterclockwise, and the unlocking gear 54 follows to rotate, such that the pin 32 slides toward the side away from the sliding block 31 along the sliding groove 21, and then the pin 32 is unlocked from the sliding block 31. By setting a number of teeth of the reversing gear 53 and the unlocking gear 54, it can be ensured that, when the emblem body 10 is subjected to a small force, the lifting assembly 5 can be unlocked from the sliding block 31, such that an unlocking time of the emblem assembly 4 is shortened, and the emblem assembly 4 quickly descends.

After the emblem assembly 4 descends, the first elastic component 36 of the emblem assembly 4 drives the transmission rack 51 of the lifting assembly 5 to move upwards, the transmission rack 51 drives the reversing gear 53 to rotate clockwise, and the unlocking gear 54 follows to rotate, such that the pin 32 slides toward a side close to the sliding block 31 along the sliding groove 21 of the mounting seat 40, and then is restored to an initial position, that is, the clamping portion 323 of the pin 32 is engaged in the engaging groove 304 of the sliding block 31.

Referring to FIG. 5 to FIG. 8, the mounting seat 40 is further provided with a second elastic component 60, a top end of the second elastic component 60 is fixed on the mounting seat 40, and a bottom end of the second elastic component 60 is fixed on the vehicle body. In another embodiment, the guide rail 50 is provided with a second elastic component fixing portion, and the bottom end of the second elastic component 60 is fixed on the second elastic component fixing portion. When the emblem assembly 4 is in a normal state, the second elastic component 60 is in a stretched state; when the emblem assembly 4 descends, the second elastic component 60 provides a downward pulling force for the emblem assembly 4, such that the emblem assembly 4 quickly descends under gravitational force of itself and the pulling force provided by the second elastic component 60, shortening a descending time of the emblem assembly 4.

Referring to FIG. 5 to FIG. 8, in the embodiments, the emblem lifting mechanism 100 includes a mounting plate 7 disposed on the vehicle body, where the guide rail 50 and the sliding block 31 are disposed on the mounting plate 7. In another embodiment, the emblem lifting mechanism 100 may be directly fixed on the vehicle body.

The mounting plate 7 is further provided with a sliding rail 9 for the sliding block 31 to slide, and the guide rail 50 and the sliding rail 9 are disposed in parallel. The first sliding portion 301 cooperates with the sliding rail 9 to enable the sliding block 31 to slide up or down, as shown in FIG. 12. Referring to FIG. 10, in the embodiments, the guide rail 50 and the sliding rail 9 are integrally disposed, and the guide rail 50 is disposed higher than the sliding rail 9. In another embodiment, the guide rail 50 and the sliding rail 9 are disposed at different positions of the mounting plate 7, the mounting seat 40 is mounted on the guide rail 50, and the mounting seat 40 drives the emblem assembly 4 and the lifting assembly 5 to slide on the guide rail 50; the first sliding portion 301 cooperates with the sliding rail 9 to enable the sliding block 31 to slide on the sliding rail 9.

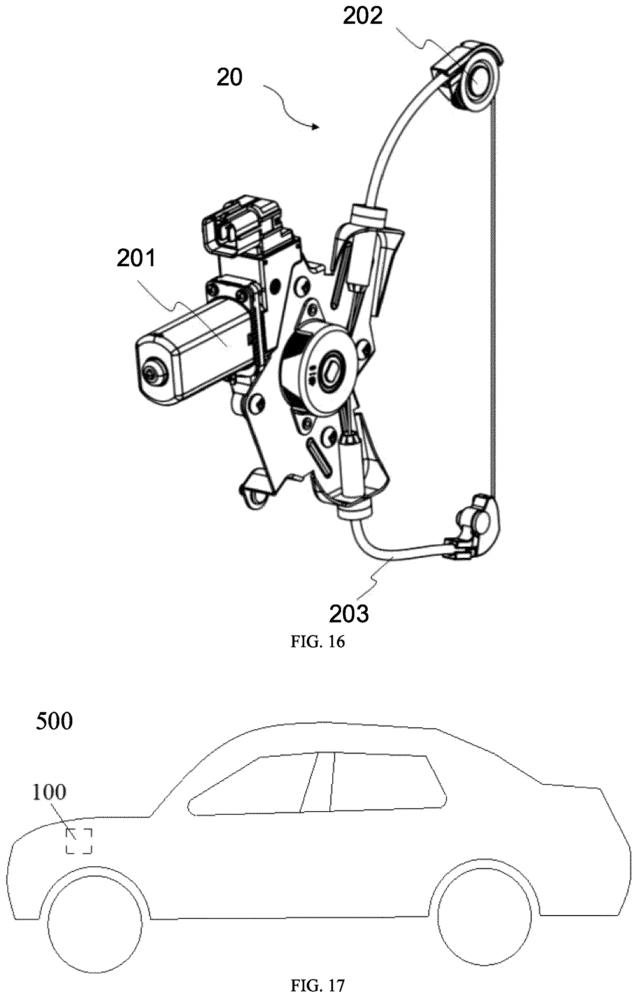

Referring to FIG. 16, the driving assembly 20 includes a motor 201, two fixed pulleys 202 and a belt 203. The motor 201 is connected to the two fixed pulleys 202 through the belt 203, and the belt 203 is sleeved outside the two fixed pulleys 202. The two fixed pulleys 202 are arranged on the mounting plate 7 spaced apart, and are disposed below a plane of the guide rail 50. When the motor 201 rotates, the belt 203 moves to drive the fixed pulleys 202 to rotate. A bottom portion of the sliding block 31 is provided with a second sliding portion 302 with an opening toward the guide rail 50, the second sliding portion 302 cooperates with the belt 203, and the sliding block 31, under the driving of the motor 201, drives the mounting seat 40 to slowly ascend or descend on the guide rail 50.

The present application further provides a vehicle 500. The vehicle is provided with a front engine compartment, a front engine hood, and an emblem cover 200 (as shown in FIG. 9). The emblem cover 200 is mounted in the front engine compartment, and when a mounting seat 40 drives an emblem assembly 4 to descend into the front engine compartment, the emblem cover 200 extends out of the front engine compartment and covers the front engine hood.

After an emblem body 10 descends, a sensor on the vehicle identifies a position of the emblem body 10, and the vehicle controls the emblem cover 200 to extend out of the front engine compartment and cover the front engine hood. When the emblem body 10 needs to be restored to its original position, the sensor on the vehicle identifies the position of the emblem body 10, and controls a motor 201 to drive a sliding block 31 to descend to a position where the emblem assembly 4 is located. In the process that the sliding block 31 gradually approaches a pin 32, a clamping portion 323 of the pin 32 does not move, and an inclined surface 303 of the sliding block 31 is in contact with the clamping portion 323 of the pin 32, until the clamping portion 323 of the pin 32 is engaged into an engaging groove 304 of the sliding block 31, and the sliding block 31 stops moving. Subsequently, the motor 201 drives the sliding block 31 to slide, so as to drive the emblem assembly 4 to slowly ascend on a guide rail 50.

The vehicle can be provided with a position sensor to identify the position of the emblem body 10. In some embodiments, the position sensor may be disposed on the mounting seat 40. After the emblem body 10 stops descending, the position sensor transmits a position signal of the emblem body 10 to the vehicle, and after the sliding block 31 is locked with a lifting device 5, the vehicle controls the motor 201 to work to drive the sliding block 31 to slowly ascend along the guide rail 50, so as to drive the emblem body 10 to ascend to the outside of the front engine hood.

In another embodiment, a pressure sensor may be disposed on a limiting block 11. When the emblem assembly 4 descends to a position where the limiting block 11 is located, the pressure sensor is triggered, the pressure sensor transmits a signal to the vehicle, and after the sliding block 31 is locked with the lifting device 5, the vehicle controls the motor 201 to work according to the signal of the pressure sensor, so as to drive the sliding block 31 to slowly ascend along the guide rail 50, and further drive the emblem body 10 to ascend to the outside of the front engine hood.

The emblem lifting mechanism 100, the emblem assembly 4, the lifting assembly 5 and the second elastic component 60 provided in the present application are mounted on the mounting seat 40, and the mounting seat 40 and the second elastic component 60 can drive the emblem assembly 4 and the lifting assembly 5 to quickly descend on the guide rail 50. The bottom portion of the emblem body 10 is provided with the transmission base 37, the transmission base 37 converts the displacement of the emblem body 10 into downward displacement, the transmission rack 51 of the lifting assembly 5 moves downwards to enable the reversing gear 53 to rotate counterclockwise, the unlocking gear 54 rotates counterclockwise to drive the pin 32 of the lifting assembly 5 to be disconnected from the sliding block 31, and the whole mounting seat 40 quickly descends along the guide rail 50. In the descending process, the second elastic component 60 provides the downward pulling force for the mounting seat 40, such that the mounting seat 40 can quickly descend, shortening the unlocking stroke of the lifting assembly 5, and accelerating the descending speed of the emblem assembly 4.

A width of the emblem assembly 4 is substantially the same as a width of the guide rail 50, a width of the lifting assembly 5 is substantially the same as the width of the guide rail 50, and the mounting seat 40 drives the emblem assembly 4 and the lifting assembly 5 to slide on the guide rail 50, such that a horizontal width of the emblem lifting mechanism 100 is relatively small, and mainly occupies a height space of the vehicle body; when the pin 32 of the lifting assembly 5 slides toward the side away from the sliding block 31, the lifting assembly 5 can be separated from the sliding block 31, and when a displacement amount of the pin 32 is maximum, an outer edge of the pin 32 does not exceed an outer edge of the mounting seat body 22, such that an overall occupied space of the emblem lifting mechanism 100 in the front engine compartment is relatively small.

Referring to FIG. 17, the vehicle 500 according to the embodiments of the present application includes the emblem lifting mechanism 100 according to any one of the above embodiments.

In the emblem lifting mechanism 100 and the vehicle 500 in the embodiments of the present application, the emblem lifting mechanism 100 is used for the vehicle 500. The emblem lifting mechanism 100 includes the emblem body 10, the driving assembly 20, and the clutch 30. The driving assembly 20 is disposed in the vehicle body of the vehicle 500. The clutch 30 selectively connects the driving assembly 20 and the emblem body 10. When the clutch 30 connects the driving assembly 20 and the emblem body 10, the driving assembly 20 is able to, through the clutch 30, drive the emblem body 10 to move relative to the vehicle body of the vehicle 500 and support the emblem body 10, and when the clutch 30 disconnects the driving assembly 20 and the emblem body 10, the emblem body 10 is able to descend under gravitational force of itself. In this way, in a normal state, the clutch 30 connects the emblem body 10 and the driving assembly 20, and the emblem lifting mechanism 100 can control the emblem body 10 to ascend and hold at a position through the driving assembly 20. When the emblem body 10 needs to descend normally, the driving assembly 20 can make the emblem body 10 descend to retract into the vehicle body through the clutch 30. When the emblem body 10 is collided by a pedestrian or is moved by an external force, the clutch 30 can directly disconnect the emblem body 10 and the driving assembly 20, such that the emblem body 10 can quickly descend under gravitational force of itself. A descending speed in this descending manner is faster than that driven by the driving assembly 20, which can effectively protect the emblem body 10.

In the embodiments of the present application, the specific type of the emblem body 10 is not limited, and the emblem body 10 may be a three-dimensional emblem or a planar graphic emblem, to meet different requirements. Meanwhile, the setting position of the emblem lifting mechanism 100 on the vehicle 500 is not limited. In addition, in the embodiments of the present application, the specific type of the vehicle 500 is not limited, and the vehicle 500 may be an electric vehicle, a gasoline vehicle, or a hybrid vehicle, to meet various requirements.

In the description of the embodiments of the present application, the terms "first" and "second" are used only for descriptive purposes, and cannot be understood as indicating or implying relative importance or implicitly indicating a number of the indicated technical features. Thus, features defined by "first" and "second" may explicitly or implicitly include one or more of the features. In the description of the embodiments of the present application, "plurality" and "multiple" mean two or more, unless clearly and specifically defined otherwise.

In the description of the present specification, the description of reference terms "an embodiment," "some embodiments," "an exemplary embodiment," "an example," "a specific example," or "some examples" or the like means that a specific feature, structure, material, or characteristic described in connection with the embodiment or example is included in at least one embodiment or example of the present application. In the present specification, schematic expressions of the above terms do not necessarily refer to same embodiments or examples. Moreover, the specific feature, structure, material or characteristic described may be combined in any one or more embodiments or examples in a suitable manner.

In the description of the present specification, similar words such as "including" or "comprising" mean that an element or an item appearing before "including" or "comprising" covers elements or items and their equivalents listed after "including" or "comprising", without excluding other elements or items. Similar words such as "connect" or "connected with each other" are not limited to physical or mechanical connections, and may include electrical connections, whether direct or indirect. Terms determined by "a/an," "the" and "said" in their singular forms in the specification and the appended claims of the present application are also intended to include plural forms, unless clearly indicated otherwise in the context. It should also be understood that the term "and/or" as used herein refers to and includes any or all possible combinations of one or more associated listed items. The cooperation in the present application includes but is not limited to mounting or dismounting relationships between elements or structures and their mounting or dismounting processes.

Although the embodiments of the present application have been shown and described above, it can be understood that the above embodiments are exemplary, and cannot be understood as limiting the present application, and those skilled in the art can make changes, modifications, substitutions and variations to the above embodiments within the scope of the present application.

## Claims

1. An emblem lifting mechanism, comprising:
an emblem body (10);
a driving assembly (20) disposed in a vehicle body of a vehicle; and
a clutch (30) selectively connecting the driving assembly (20) and the emblem body (10),
wherein when the clutch (30) connects the driving assembly (20) and the emblem body (10), the driving assembly (20) is able to, through the clutch (30), drive the emblem body (10) to move relative to the vehicle body of the vehicle and support the emblem body (10); and
wherein when the clutch (30) disconnects the driving assembly (20) and the emblem body (10), the emblem body (10) is able to descend under gravitational force of the emblem body (10).

2. The emblem lifting mechanism according to claim 1, further comprising a mounting seat (40), wherein the emblem body (10) is provided on the mounting seat (40), and at least a part of the clutch (30) is disposed on the mounting seat (40).

3. The emblem lifting mechanism according to claim 2, wherein the clutch (30) comprises a sliding block (31) and a pin (32), wherein the pin (32) is slidably inserted in the sliding block (31), the driving assembly (20) is connected to the sliding block (31), the pin (32) is movably disposed on the mounting seat (40), and an end of the pin (32) away from the sliding block (31) is connected to the emblem body (10).

4. The emblem lifting mechanism according to claim 3, wherein the pin (32) comprises a first end (321) and a second end (322) disposed opposite to each other, wherein the sliding block (31) comprises an engaging groove (304), and wherein the second end (322) of the pin (32) is connected to the emblem body (10), and the first end (321) of the pin (32) is extended into the engaging groove (304) of the sliding block (31), such that the sliding block (31) is able to drive the emblem body (10) to ascend or descend through the pin (32).

5. The emblem lifting mechanism according to claim 4, wherein the clutch (30) further comprises an upper swing rod (33), a rocker (34) and a lower swing rod (35) sequentially connected from top to bottom, and wherein the rocker (34) is rotatably fixed on the mounting seat (40) through a fixing shaft (341), two ends of the rocker (34) are respectively connected to the upper swing rod (33) and the lower swing rod (35), an end of the upper swing rod (33) away from the rocker (34) is connected to the emblem body (10), and an end of the lower swing rod (35) away from the rocker (34) is connected to the pin (32).

6. The emblem lifting mechanism according to claim 5, wherein the clutch (30) further comprises a first elastic component (36) and a transmission base (37), and wherein the emblem body (10) is disposed on the transmission base (37), and two ends of the first elastic component (36) are respectively connected to the transmission base (37) and the upper swing rod (33).

7. The emblem lifting mechanism according to claim 6, wherein the transmission base (37) is further formed with a connecting rod (371), and the first elastic component (36) is sleeved on the connecting rod (371).

8. The emblem lifting mechanism according to claim 7, wherein the clutch (30) further comprises a connecting seat (38) disposed on the mounting seat (40), and wherein the connecting seat (38) is formed with a through hole (381), the connecting rod (371) is inserted into the through hole (381) and is able to slide relative to the connecting seat (38), the two ends of the first elastic component (36) are respectively connected to the transmission base (37) and the mounting seat (40), and the connecting rod (371) is hinged to the end of the upper swing rod (33) away from the rocker (34).

9. The emblem lifting mechanism according to claim 3, further comprising a guide rail (50) disposed in the vehicle body of the vehicle, wherein the sliding block (31) is slidably disposed on the guide rail (50).

10. The emblem lifting mechanism according to claim 2, further comprising a second elastic component (60), wherein the second elastic component (60) is in a tensioned state and is respectively connected to the mounting seat (40) and the vehicle body of the vehicle.

11. The emblem lifting mechanism according to claim 1, further comprising a guide rail (50), a mounting seat (40) and a sliding block (31), wherein the sliding block (31) is able to drive the mounting seat (40) to slide on the guide rail (50), and the mounting seat (40) is provided with an emblem assembly (4);
wherein the emblem assembly (4) comprises the emblem body (10) and a connecting rod (371) fixed to the emblem body (10);
wherein the clutch (30) comprises a lifting assembly (5), the lifting assembly (5) comprises a transmission rack (51), a gear structure (52) and a pin (32), the gear structure (52) is respectively meshed with the transmission rack (51) and the pin (32), the transmission rack (51) is fixed to the connecting rod (371), and the pin (32) is locked with the sliding block (31); and
wherein the emblem body (10) is stressed to trigger the transmission rack (51) to move downwards, such that the gear structure (52) is driven to rotate to enable the pin (32) to be separated from the sliding block (31), and the emblem assembly (4) is rapidly descended under gravitational force of the emblem assembly (4) along the guide rail (50).

12. The emblem lifting mechanism according to claim 11, wherein the mounting seat (40) is provided with a second elastic component (60), a top end of the second elastic component (60) is fixed on the mounting seat (40), a bottom end of the second elastic component (60) is fixed on the vehicle body, and wherein when the emblem assembly (4) is rapidly descended, the second elastic component (60) provides a downward pulling force.

13. The emblem lifting mechanism according to claim 11, wherein the gear structure (52) comprises a reversing gear (53) and an unlocking gear (54) that are coaxially connected, and wherein the reversing gear (53) is meshed with the transmission rack (51), and the unlocking gear (54) is meshed with the pin (32).

14. The emblem lifting mechanism according to claim 11, wherein a transmission base (37) is disposed between the emblem body (10) and the connecting rod (371), and wherein when the emblem body (10) is stressed, the transmission base (37) is able to convert displacement of the emblem body (10) into displacement of the connecting rod (371) in a vertical direction.

15. The emblem lifting mechanism according to claim 14, wherein the emblem assembly (4) further comprises a first elastic component (36), wherein a top portion of the first elastic component (36) is abutted against the connecting rod (371), and a bottom portion of the first elastic component (36) is abutted against the mounting seat (40); and wherein the emblem assembly (4) further comprises an emblem base (103), and the emblem body (10) is in clearance fit with the emblem base (103).

16. The emblem lifting mechanism according to claim 13, wherein the pin (32) comprises a clamping portion (323) and a meshing portion (324), and wherein the clamping portion (323) is engaged with the sliding block (31), and the meshing portion (324) is meshed with the unlocking gear (54).

17. The emblem lifting mechanism according to claim 11, wherein the mounting seat (40) is provided with a sliding groove (21) for the pin (32) to slide, and the sliding groove (21) is disposed in an inclined manner.

18. The emblem lifting mechanism according to claim 11, further comprising a mounting plate (7), wherein the guide rail (50) is fixed on the mounting plate (7), the mounting plate (7) is further provided with a sliding rail (9) for the sliding block (31) to slide, and the sliding rail (9) and the guide rail (50) are integrally arranged.

19. The emblem lifting mechanism according to claim 11, wherein the driving assembly (20) comprises a motor (201), and the motor (201) is able to drive the sliding block (31) to drive the mounting seat (40) to slowly ascend or descend on the guide rail (50).

20. The emblem lifting mechanism according to claim 19, wherein the driving assembly (20) further comprises two fixed pulleys (202), wherein the two fixed pulleys (202) are connected to the motor (201) through a belt, and the motor (201) is able to drive the belt (203) to move.

21. The emblem lifting mechanism according to claim 20, wherein the sliding block (31) is provided with a first sliding portion (301) and a second sliding portion (302) with an opening toward the guide rail (50), and wherein the second sliding portion (302) is in cooperation with the belt (203).

22. The emblem lifting mechanism according to claim 21, wherein the lifting assembly (5) is disposed below the emblem assembly (4).

23. A vehicle (500), comprising an emblem lifting mechanism according to any one of claims 1-22.

24. The vehicle (500) according to claim 23, further comprising an emblem cover (200) and a front engine hood, wherein the emblem lifting mechanism (100) is mounted in a front engine compartment of the vehicle, and the emblem cover (200) is mounted on the front engine hood.
